# EUROPEAN PATENT APPLICATION

(11) **EP 4 597 812 A1**
(43) Date of publication of application: **06.08.2025**
(21) Application number: 25153220.6
(22) Date of filing: 22.01.2025
(51) Int. Cl.: H02M 1/00, H02M 3/07, H02M 3/158, H02M 1/32

(54) **THREE-LEVEL BOOST CONVERTER, METHOD AND APPARATUS FOR CONTROLLING THREE-LEVEL BOOST CONVERTER AND PHOTOVOLTAIC SYSTEM**

(30) Priority: 05.02.2024 CN 202410166390
(71) Applicant: Sungrow Power Supply Co., Ltd., Hefei, Anhui 230088 (CN)
(72) Inventor: HU, Fanyu, Hefei, Anhui, 230088 (CN); PAN, Nian an, Hefei, Anhui, 230088 (CN); CAO, Jinhu, Hefei, Anhui, 230088 (CN)
(74) Representative: Zacco Norway AS

(57) **Abstract**

A three-level boost converter, a method and an apparatus for controlling the three-level boost converter, and a photovoltaic system are provided according to the present disclosure. The three-level boost converter includes an inductor, a first switching transistor, a second switching transistor, a first diode, a second diode, a third diode, a flying capacitor and a controller. The controller is configured to synchronize, upon determining that the first switching transistor is abnormal or the second switching transistor is abnormal, an on-off state of the first switching transistor with an on-off state of the second switching transistor. The three-level boost converter can reduce the failure risk of the converter due to out of control of a switching device and improve the stability of a power transmission system.

## Description

### FIELD

The present disclosure relates to the technical field of power electronics, and in particular to a three-level boost converter, a method and an apparatus for controlling the three-level boost converter and a photovoltaic system.

### BACKGROUND

As a common power electronic device, a three-level boost converter is widely used in various power transmission systems. In order to reduce the size of the inductor and reduce the cost, the three-level boost converter with a flying capacitor is usually used. However, in practical applications, out of control of a switching device often leads to a failure of the converter, having a great security risk. A switching device being out of control and failing to be normally turned on and off may lead to an overvoltage failure or an overcurrent failure of a switching module, and may cause a DC bus to burst due to overvoltage.

Currently, no effective solution is provided to solve the problem of out of control of the switching device. Therefore, a three-level boost converter is to be provided to reduce the risk of failure of the converter due to out of control of a switching device, and to improve the stability of the power transmission system.

### SUMMARY

In view of the above technical problem, a three-level boost converter, a method and an apparatus for controlling a three-level boost converter, and a photovoltaic system are provided, to reduce the risk of failure of the converter due to out of control of a switching device, and to improve the stability of a power transmission system.

In a first aspect, a three-level boost converter is provided according to the present disclosure. The three-level boost converter includes: an inductor, a first switching transistor, a second switching transistor, a first diode, a second diode, a third diode, a flying capacitor and a controller;
a first terminal of the inductor is configured to connect a positive input terminal of the three-level boost converter;
a first terminal of the first switching transistor is connected to a second terminal of the inductor;
a first terminal of the second switching transistor is connected to a second terminal of the first switching transistor, and a second terminal of the second switching transistor is configured to connect a negative input terminal of the three-level boost converter;
an anode of the first diode is connected to the second terminal of the inductor and the first terminal of the first switching transistor;
an anode of the second diode is connected to a cathode of the first diode, a cathode of the second diode is configured to connect a positive input terminal of a direct-current, DC, bus, and a negative input terminal of the DC bus is connected to the negative input terminal of the three-level boost converter;
an anode of the third diode is connected to the second terminal of the first switching transistor, and a cathode of the third diode is configured to connect a neutral point of the DC bus;
a first terminal of the flying capacitor is connected to the cathode of the first diode, and a second terminal of the flying capacitor is connected to the anode of the third diode; and
the controller is configured to synchronize, upon determining that the first switching transistor is abnormal or the second switching transistor is abnormal, an on-off state of the first switching transistor with an on-off state of the second switching transistor.

In an embodiment, the controller is configured to drive, in response to the abnormal switching transistor, the normal switching transistor to be in an on-off state of the abnormal switching transistor;
where, the abnormal switching transistor is the first switching transistor or the second switching transistor whose the on-off state does not match a received turn-on/off signal.

In an embodiment, the controller is configured to drive the first switching transistor and the second switching transistor to be continuously on, in response to the first switching transistor being still on after the controller outputs a turn-off signal to the first switching transistor, or in response to the second switching transistor being still on after the controller outputs a turn-off signal to the second switching transistor.

In an embodiment, the controller is configured to drive the first switching transistor and the second switching transistor to be continuously off, in response to the first switching transistor being still off after the controller outputs a turn-on signal to the first switching transistor, or in response to the second switching transistor being still off after the controller outputs a turn-on signal to the second switching transistor.

In a second aspect, a three-level boost control system is provided according to the present disclosure. The three-level boost control system includes:
the three-level boost converter as described in the above embodiments;
a DC switch, where an end of the DC switch is configured to connect a DC power supply for the three-level boost control system, and another end of the DC switch is connected to an input end of the three-level boost converter; and
the controller is further configured to control the DC switch to cut off the DC power supply upon determining that the first switching transistor is abnormal or the second switching transistor is abnormal.

In a third aspect, a method for controlling a three-level boost converter is provided according to the present disclosure, and is applied to the three-level boost converter in the above embodiments. The method includes:
obtaining an operating state of the first switching transistor and an operating state of the second switching transistor; and
synchronizing, upon determining that the first switching transistor is abnormal or the second switching transistor is abnormal, the on-off state of the first switching transistor with the on-off state of the second switching transistor.

In an embodiment, the synchronizing, upon determining that the first switching transistor is abnormal or the second switching transistor is abnormal, the on-off state of the first switching transistor with the on-off state of the second switching transistor includes:
driving, in response to the abnormal switching transistor, the normal switching transistor to be in an on-off state of the abnormal switching transistor;
where the abnormal switching transistor is the first switching transistor or the second switching transistor whose the on-off state does not match a received turn-on/off signal.

In an embodiment, the driving, in response to the abnormal switching transistor, the normal switching transistor to be in an on-off state of the abnormal switching transistor includes:
driving the first switching transistor and the second switching transistor to be continuously on, in response to the first switching transistor being still on after a turn-off signal is outputted to the first switching transistor, or in response to the second switching transistor being still on after a turn-off signal is outputted to the second switching transistor.

In an embodiment, the driving, in response to the abnormal switching transistor, the normal switching transistor to be in an on-off state of the abnormal switching transistor includes:
driving the first switching transistor and the second switching transistor to be continuously off, in response to the first switching transistor being still off after a turn-on signal is outputted to the first switching transistor, or in response to the second switching transistor being still off after a turn-on signal is outputted to the second switching transistor.

In a fourth aspect, a method for controlling a three-level boost control system is further provided according to the present disclosure, and is applied to the three-level boost control system in the above embodiments. The method includes:
obtaining an operating state of the first switching transistor and an operating state of the second switching transistor; and
controlling, upon determining that the first switching transistor is abnormal or the second switching transistor is abnormal, the DC switch to cut off the DC power supply.

In a fifth aspect, an apparatus for controlling a three-level boost converter is further provided according to the present disclosure, and is applied to the three-level boost converter in the above embodiments. The apparatus includes:
an operating state obtaining module for a switching transistor, configured to obtain an operating state of the first switching transistor and an operating state of the second switching transistor; and
a driving control module, configured to synchronize, upon determining that the first switching transistor is abnormal or the second switching transistor is abnormal, the on-off state of the first switching transistor with the on-off state of the second switching transistor.

In a sixth aspect, a photovoltaic system is provided according to the present disclosure, and includes:
a photovoltaic module;
an inverter circuit; and
the three-level boost converter in the above embodiments, where an end of the three-level boost converter is connected to an output end of the photovoltaic module, and another end of the three-level boost converter is connected to an input end of the inverter circuit.

In a seventh aspect, a controller is further provided according to the present disclosure. The controller includes a memory and a processor. The memory stores a computer program, and the processor performs, when executing the computer program, the method in the above embodiments.

In an eighth aspect, a computer-readable storage medium is further provided according to the present disclosure. The computer-readable storage medium stores a computer program, and the computer program performs, when being executed by a processor, the method in the above embodiments.

The above three-level boost converter, the method and the apparatus for the three-level boost converter and the photovoltaic system at least include the following beneficial effects.

The on-off state of the first switching transistor is synchronized with the on-off state of the second switching transistor, avoiding overvoltage and overcurrent and reducing the risk of failure. In a case that one of the first switching transistor and the second switching transistor is abnormal, parameters are obtained to determine the abnormal device, other normal controllable switching devices are controlled to perform corresponding protection operation to keep synchronization of the on-off states, thereby avoiding a more serious damage to the three-level boost converter due to the out of control of the individual switching device, and ensuring the stability and reliability of the system.

### BRIEF DESCRIPTION OF THE DRAWINGS

For clearer illustration of the technical solutions according to embodiments of the present disclosure or conventional technology, the drawings to be used in embodiments of the present disclosure or the conventional technology are briefly described hereinafter. Apparently, the drawings in the following descriptions show only some embodiments of the present disclosure and other drawings may be obtained by those skilled in the art based on the provided drawings without creative efforts.
FIG. 1 is a schematic structural diagram of a three-level boost converter in the conventional technology;
FIG. 2 is a schematic diagram of a change in an inductor current during turning on or off a switching transistor of a three-level boost converter in the conventional technology;
FIG. 3 is a schematic structural diagram of a three-level boost converter according to an embodiment of the present disclosure;
FIG. 4a is a schematic diagram of a current path in a case that a first switching transistor fails to be turned off and a second switching transistor is off according to an embodiment of the present disclosure;
FIG. 4b is a schematic diagram of a current path in a case that a first switching transistor fails to be turned off and the first switching transistor and a second switching transistor are driven to be continuously on according to an embodiment of the present disclosure;
FIG. 5a is a schematic diagram of a current path in a case that a first switching transistor is turned on and a second switching transistor is turned off according to an embodiment of the present disclosure;
FIG. 5b is a schematic diagram of a current path in a case that a first switching transistor fails to be turned on and a second switching transistor is on according to an embodiment of the present disclosure;
FIG. 6a is a schematic diagram of a current path in a case that a second switching transistor fails to be turned off and a first switching transistor is continuously off according to an embodiment of the present disclosure;
FIG. 6b is a schematic diagram of a current path in a case that a second switching transistor fails to be turned off and a first switching transistor is on according to an embodiment of the present disclosure;
FIG. 7a is a schematic diagram of a current path in a case that a second switching transistor is on and a first switching transistor is off according to an embodiment of the present disclosure;
FIG. 7b is a schematic diagram of a current path in a case that a second switching transistor fails to be turned on and a first switching transistor is off according to an embodiment of the present disclosure;
FIG. 8 is a flowchart of a method for controlling a three-level boost converter according to an embodiment of the present disclosure;
FIG. 9 is a flowchart of a method for controlling a three-level boost control system according to an embodiment of the present disclosure;
FIG. 10 is a schematic structural diagram of an apparatus for controlling a three-level boost converter according to an embodiment of the present disclosure ; and
FIG. 11 is an internal structural diagram of a controller according to an embodiment of the present disclosure.

### DETAILED DESCRIPTION

In order to facilitate understanding of the present disclosure, hereinafter the present disclosure is described in detail in conjunction with the drawings. The drawings show embodiments of the present disclosure. However, the present disclosure may be implemented in many different forms and is not limited to the embodiments described herein. On the contrary, the purpose of providing these embodiments is to make the understanding of the present disclosure more thorough and comprehensive.

Unless otherwise defined, all technical and scientific terms used herein have the same meaning as those commonly understood by those skilled in the art to which the present disclosure belongs. The terms used in the specification of the present disclosure are only for the purpose of describing specific embodiments rather than limiting the present disclosure.

It should be understood that the terms "first", "second" and the like used in the present disclosure may be used herein to describe various elements, but these elements are not limited by these terms. The terms are only used to distinguish a first element from another element. For example, without departing from the scope of the present disclosure, a first resistor may be referred to as a second resistor, and similarly, a second resistor may be referred to as a first resistor. Both the first resistor and the second resistor are resistors, but they are not the same resistor.

It should be understood that the "connection" in the following embodiments is understood to be "electrical connection", "communication connection", and the like, in a case that the connected circuits, modules, units and the like have electrical signals or data transmission between each other.

It should be understood that "at least one" means one or more, and "multiple" means two or more. "At least part of an element" means part or all of an element.

When used herein, "a", "an" and "said/the" in singular forms may also include plural forms, unless the context clearly indicates otherwise. It should also be understood that the terms "include/comprise" or "have" specify the presence of stated features, entireties, steps, operations, components, parts or combinations thereof, but do not exclude the possibility of the presence or addition of one or more other features, entireties, steps, operations, components, parts or combinations thereof.

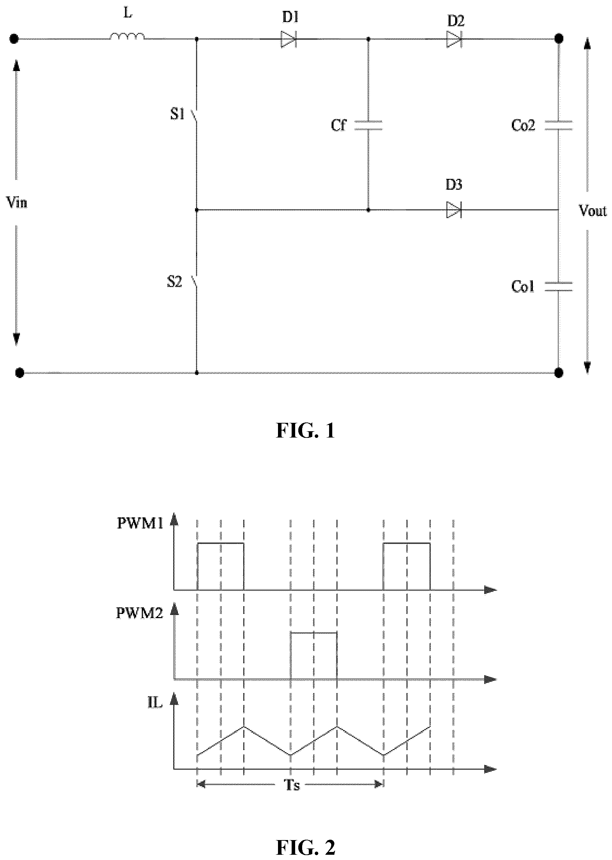

As described in the background, in a case that a three-level boost converter is applied to a photovoltaic inverter circuit system, a first terminal of the three-level boost converter is connected to a photovoltaic module, and a second terminal of the three-level boost converter is connected to a DC bus capacitor (including an upper-half bus capacitor Co2 and a lower-half bus capacitor Co1) of the inverter circuit. The present disclosure focuses on detailed descriptions of solutions for the photovoltaic inverter circuit system. FIG. 1 illustrates a diagram of a basic topological structure of a common three-level boost converter with a flying capacitor Cf. The topology of the three-level boost converter mainly includes: a switching device (including a first switching transistor S 1 and a second switching transistor S2), an inductor L, a flying capacitor Cf, two freewheeling diodes (including a first diode D 1 and a second diode D2) and a clamping diode (i.e., a third diode D3). A first terminal of the three-level boost converter is connected to a DC power supply, and a second terminal of the three-level boost converter is connected to the DC bus capacitor including an upper-half capacitor and a lower-half capacitor. A controller sends asymmetric driving signals to the first switching transistor S1 and the second switching transistor S2, respectively, to increase a charging-discharging frequency of the inductor L, thereby reducing a ripple current of the inductor L, and reducing the size of the inductor L, thereby achieving the purpose of reducing the size of the three-level boost converter. In one switching cycle of the first switching transistor S1 and the second switching transistor S2, the inductor L is charged and discharged twice. As shown in FIG. 2, PWM1 represents a driving signal of the first switching transistor S1, and PWM2 represents a driving signal of the second switching transistor S2.

In practical applications, if a switching device is damaged or a driving circuit for the switching device is abnormal, the switching device may be out of control and fail to be turned on and off normally. For example, the first switching transistor S1 fails to be turned off and is always on, or the first switching transistor S1 fails to be turned on and is always off. Similarly, the second switching transistor S2 may be out of control. Furthermore, an individual switching device being out of control may lead to an over-voltage failure or an over-current failure of a switching module, may cause the DC bus to burst due to overvoltage, and may cause a front stage and a rear stage connected to the boost converter to fail to operate normally, resulting in a serious security risk.

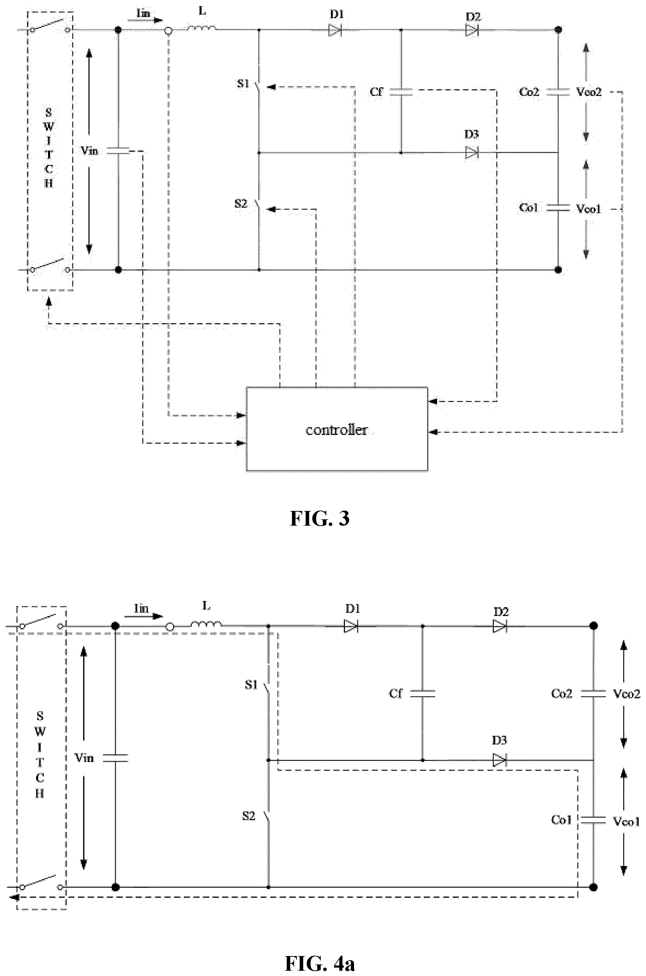

In view of the above problem, as shown in FIG. 3, a three-level boost converter is provided according to an embodiment of the present disclosure. The three-level boost converter includes an inductor L, a first switching transistor S1, a second switching transistor S2, a first diode D1, a second diode D2, a third diode D3, a flying capacitor Cf and a controller. A first terminal of the inductor L is configured to connect a positive input terminal of the three-level boost converter. A first terminal of the first switching transistor S1 is connected to a second terminal of the inductor L. A first terminal of the second switching transistor S2 is connected to a second terminal of the first switching transistor S1, and a second terminal of the second switching transistor S2 is configured to connect a negative input terminal of the three-level boost converter. An anode of the first diode D1 is connected to the second terminal of the inductor L and the first terminal of the first switching transistor S1. An anode of the second diode D2 is connected to a cathode of the first diode D1, and a cathode of the second diode D2 is configured to connect a first terminal of the DC bus. A second terminal of the DC bus is connected to the negative input terminal of the three-level boost converter. An anode of the third diode D3 is connected to the second terminal of the first switching transistor S1, and a cathode of the third diode D3 is configured to connect a neutral point of the DC bus. A first terminal of the flying capacitor Cf is connected to the cathode of the first diode D1, and a second terminal of the flying capacitor Cf is connected to the anode of the third diode D3. The controller is configured to synchronize, upon determining that the first switching transistor S1 is abnormal or the second switching transistor S2 is abnormal, an on-off state of the first switching transistor S1 with an on-off state of the second switching transistor S2.

The abnormality of the first switching transistor S1 may be the first switching transistor S1 failing to be turned off or failing to be turned on. The abnormality of the second switching transistor S2 may be the second switching transistor S2 failing to be turned off or failing to be turned on.

For example, in a case that one of the first switching transistor S1 and the second switching transistor S2 fails to be turned off or on, the three-level boost converter varies differently in parameters such as a DC bus voltage Vout, a voltage of the flying capacitor Cf, an input voltage Vin, and an input current Iin. The controller may obtain the parameters, and determines, based on the above parameters, whether the first switching transistor S1 fails to be turned off or on, or the second switching transistor S2 fails to be turned off or on, and synchronizes the on-off state of the first switching transistor S1 with the on-off state of the second switching transistor S2, avoiding overvoltage and overcurrent. For example, the first switching transistor S1 or the second switching transistor S2 is out of control, resulting in a voltage or current outside a design range of the three-level boost converter, causing overvoltage or overcurrent, and damaging the switching devices and the entire system. By synchronizing the on-off state of the first switching transistor S1 with the on-off state of the second switching transistor S2, the changes in voltage and current are effectively controlled to avoid overvoltage and overcurrent, and reduce the risk of failure. It should be noted that, in addition to determining whether the first switching transistor S1 is abnormal or the second switching transistor S2 is abnormal based on the above parameters, the parameters for determining whether the first switching transistor is abnormal or the second switching transistor is abnormal based on a structure of the three-level boost converter may be adaptively increased or decreased by those skilled in the art, which are not repeated herein.

In the above embodiment, the on-off state of the first switching transistor S1 is synchronized with the on-off state of the second switching transistor S2, avoiding overvoltage and overcurrent, thus reducing the risk of failure. In a case that one of the first switching transistor S1 and the second switching transistor S2 is abnormal, the controller obtains parameters to determine the abnormal device, and controls other normal controllable switching devices to perform corresponding protection operation to keep synchronization of the on-off states, thereby avoiding a more serious damage to the three-level boost converter due to the out of control of the individual switching device, and ensuring the stability and reliability of the system.

In an embodiment, the controller is configured to drive, in response to the abnormal switching transistor, the normal switching transistor to be in an on-off state of the abnormal switching transistor.

The abnormal switching transistor is the first switching transistor S1 or the second switching transistor S2 whose the on-off state does not match a received turn-on/off signal.

For example, the controller immediately determines, upon detecting that the first switching transistor S 1 or the second switching transistor S2 whose the on-off state does not match a received turn-on/off signal, the abnormal switching transistor and drive the other normal switching transistor to be in the on-off state of the abnormal switching transistor, thereby avoiding a more serious damage to the three-level boost converter due to the out of control of an individual switching device, and ensuring the stability and reliability of the system.

In an embodiment, the controller is configured to drive the first switching transistor S1 and the second switching transistor S2 to be continuously on, in response to the first switching transistor S1 being still on after the controller outputs a turn-off signal to the first switching transistor, or the second switching transistor S2 being still on after the controller outputs a turn-off signal to the second switching transistor.

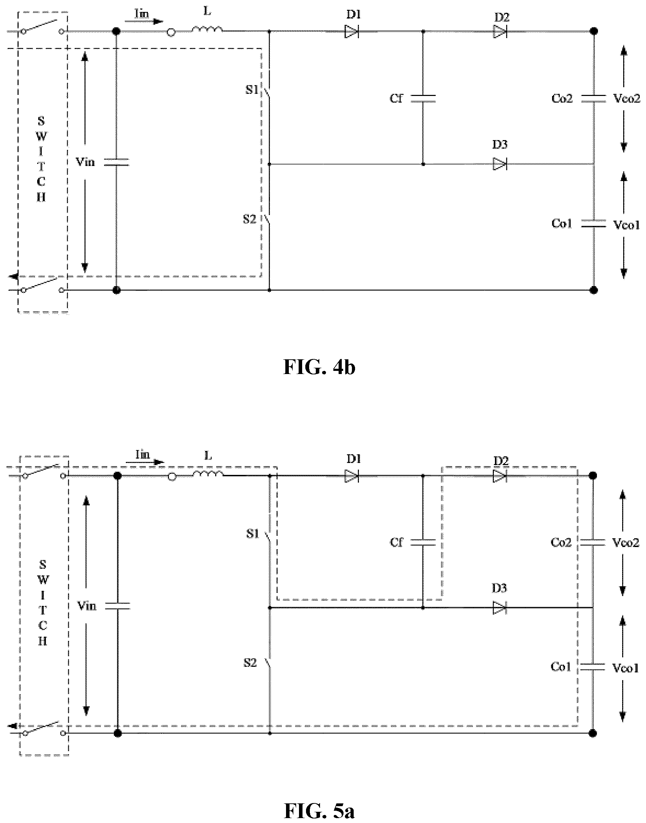

For example, during the normal operation of the three-level boost converter, in a case that the first switching transistor S 1 is still on after the controller outputs the turn-off signal to the first switching transistor, it indicates that the first switching transistor S 1 fails to be turned off and is always on. In a case that the first switching transistor is always on, the input current Iin suddenly increases, causing a DC overcurrent fault. In addition, the input voltage Vin (that is, Vin=Vout-Vcf) is clamped by a difference between the DC bus voltage Vout and the voltage of the flying capacitor Cf. After the inverter circuit connected to the second terminal of the three-level boost converter stops operating, the input voltage Vin charges the lower-half bus capacitor Co1 through a path shown by the dotted line in FIG. 4a. The too high input voltage Vin of the photovoltaic module causes the lower-half bus capacitor Co1 to burst due to overvoltage, causing a more serious safety accident. Therefore, upon detecting that the input current Iin increases and the input voltage Vin is equal to the difference between the DC bus voltage Vout and the voltage of the flying capacitor Cf, the controller determines that the first switching transistor S1 fails to be turned off, and drives the first switching transistor S1 and the second switching transistor S2 to be continuously on, and the DC input is short-circuited through a path shown by the dotted line in FIG. 4b to cut off a charging circuit of the lower-half bus capacitor Co1, thereby preventing the lower-half bus capacitor Co1 from bursting due to overvoltage caused by the too high input voltage Vin of the photovoltaic module.

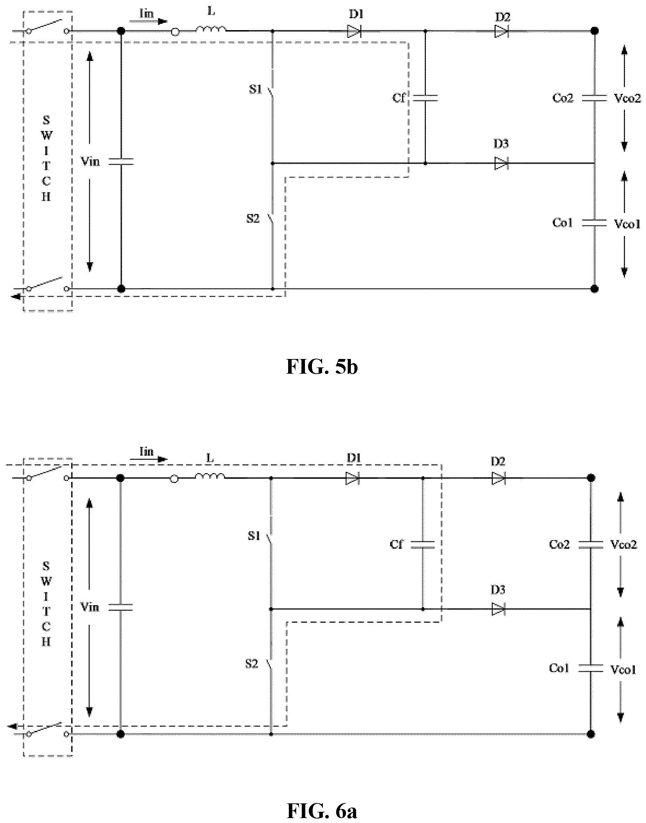

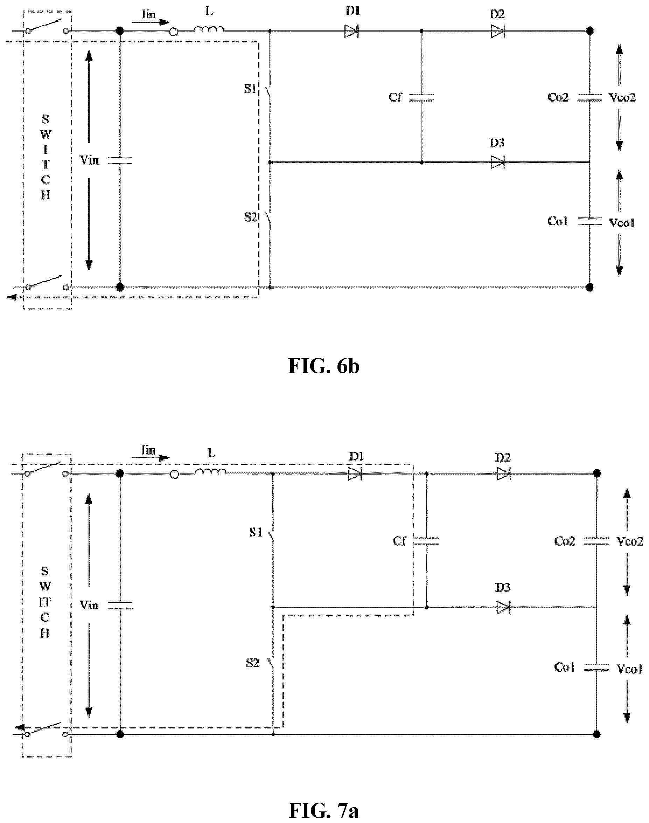

In a case that the second switching transistor S2 is still on after the turn-off signal is outputted to the second switching transistor, it indicates that the second switching transistor S2 is out of control and fails to be turned off, and thus is always on. The always-on second switching transistor suddenly increases the input current Iin, thereby causing a DC overcurrent fault. In a case that the second switching transistor S2 is always on, the boost converter only has two commutation loops as shown in FIG. 6a and FIG. 6b. If the flying capacitor Cf is always charged, overvoltage protection on the flying capacitor Cf is triggered, and the three-level boost converter fails to continue the normal operation. After the three-level boost converter stops operating, a voltage across the first switching transistor S 1, the voltage of the flying capacitor Cf and the input voltage Vin are equal to each other. In such case, a case that the high input voltage Vin may cause an overvoltage failure of the first switching transistor S 1, and the flying capacitor Cf is damaged by overvoltage. Therefore, when the controller detects that the voltage of the flying capacitor Cf increases uncontrollably (that is, is always charged), and a duty cycle representing a relationship between the input voltage Vin and the DC bus voltage Vout during the process of increasing the voltage of the flying capacitor Cf is approximately half of a duty cycle during the normal operation of the three-level boost converter, that is, the input voltage Vin decreases, and the input current Iin increases. In addition, after the flying capacitor Cf stops operating due to triggering the overvoltage protection, the controller automatically outputs an always-off signal to the first switching transistor S1 and an always-off signal to the second switching transistor S2. In such case, if the voltage of the flying capacitor Cf changes with the input voltage Vin, and the input voltage Vin is greater than a predetermined voltage threshold, it is determined that the second switching transistor S2 is out of control and fails to be turned off, and the first switching transistor S1 and the second switching transistor S2 are driven to be continuously on, avoiding an overvoltage failure of the first switching transistor S1 and an overvoltage failure of the flying capacitor Cf, thereby avoiding a damage to the three-level boost converter. The predetermined voltage threshold is a maximum withstand voltage of the flying capacitor Cf.

In an embodiment, the controller is configured to drive the first switching transistor S1 and the second switching transistor S2 to be continuously off, in response to the first switching transistor S1 being still off after the controller outputs a turn-on signal to the first switching transistor, or the second switching transistor S2 being still off after the controller outputs a turn-on signal to the second switching transistor.

For example, during the normal operation of the three-level boost converter, in a case that the first switching transistor S1 is still off after the turn-on signal is outputted to the first switching transistor, it indicates that the first switching transistor S1 fails to be turned on and is always off. A loop shown by the dotted line in FIG. 5a in a case that the first switching transistor S1 is on fails to be formed. As a result, the flying capacitor Cf has no discharging circuit, and only has a charging circuit as shown in FIG 5b in a case that the second switching transistor S2 is on, breaking a charging and discharging balance of the flying capacitor Cf, resulting in the flying capacitor Cf being out of control, and the three-level boost converter failing to continue the normal operation, and having a risk of failure. Therefore, when the controller detects that the voltage of the flying capacitor Cf increases uncontrollably, and the duty cycle representing the relationship between the input voltage Vin and the DC bus voltage Vout during the process of increasing the voltage of the flying capacitor Cf is half of the duty cycle during the normal operation of the three-level boost converter, that is, the input voltage Vin decreases and the input current Iin increases. In addition, after the flying capacitor Cf stops operating due to the triggering the overvoltage protection, the controller automatically outputs the always-off signal to the first switching transistor S1 and outputs the always-off signal to the second switching transistor S2. In such case, if the voltage of the flying capacitor Cf no longer increases, it is determined that the first switching transistor S1 fails to be turned on, and the first switching transistor S1 and the second switching transistor S2 are controlled to be continuously off, avoiding a further damage to the three-level boost converter.

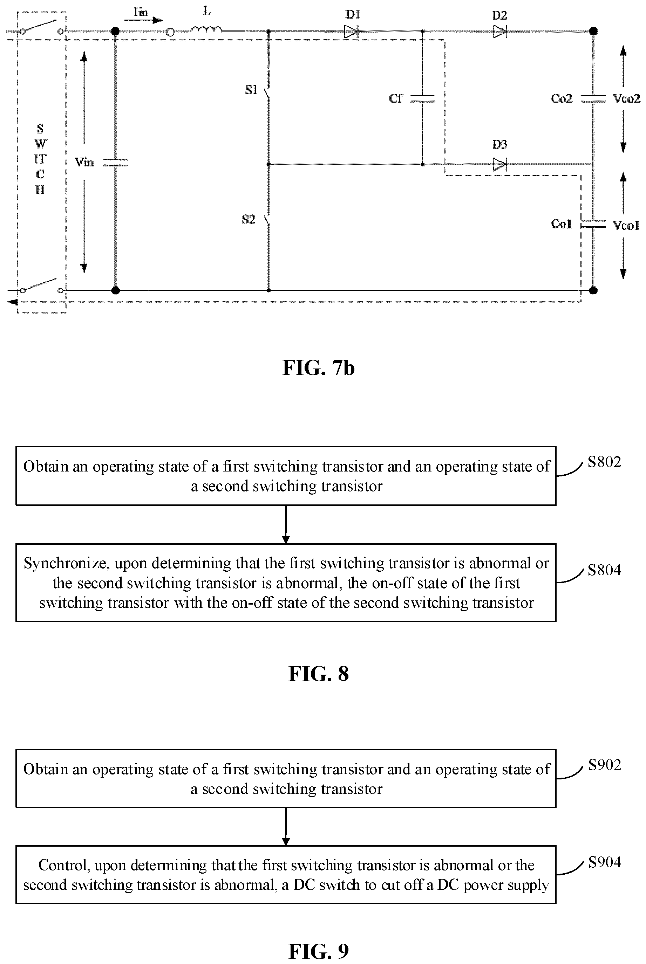

During the normal operation of the three-level boost converter, in a case that the second switching transistor S2 is still off after the turn-on signal is outputted to the second switching transistor, it indicates that the second switching transistor S2 fails to be turned on. In a case that the second switching transistor S2 is out of control and fails to be turned on, a commutation circuit as shown in FIG. 7b is formed rather than a charging circuit for the flying capacitor Cf as shown in FIG. 7a. As a result, the voltage of the flying capacitor Cf is stable at half of the DC bus voltage Vout for a long time, and the voltage of the flying capacitor Cf fails to be reach a voltage greater than a voltage Vco2 of the upper-half bus capacitor during the normal operation. Therefore, upon determining that the voltage of the flying capacitor Cf is out of control during operation and drops to a voltage close to the voltage Vco2 of the upper-half bus capacitor, or the voltage of the flying capacitor Cf fails to be pre-charged to a preset voltage for a long time during the startup process, and the PWM driving signal calculated and outputted by the controller is similar to the design, the controller can determine that the second switching transistor S2 fails to be turned on, and the first switching transistor S 1 and the second switching transistor S2 are driven to be continuously off, ensuring the safety operation of the three-level boost converter and the inverter circuit.

A three-level boost control system is further provided according to the present disclosure. The three-level boost control system includes the three-level boost converter as described in the above embodiments and a DC switch SWITCH. An end of the DC switch SWITCH is configured to connect the DC power supply for the three-level boost control system, and another end of the DC switch SWITCH is connected to the three-level boost converter. The controller is further configured to control the DC switch SWITCH to cut off the DC power supply upon determining that the first switching transistor S1 is abnormal or the second switching transistor S2 is abnormal.

The DC switch SWITCH is arranged between the DC power supply and the three-level boost converter. The controller is further configured to control the DC switch SWITCH to cut off the DC power supply upon determining that the first switching transistor S1 is abnormal or the second switching transistor S2 is abnormal. The DC power supply may be a power supply device such as a photovoltaic module.

For example, as shown in FIG. 3, upon determining that the first switching transistor S1 is abnormal or the second switching transistor S2 is abnormal, in addition to synchronizing the on-off state of the first switching transistor S 1 with the on-off state of the second switching transistor S2, the DC switch SWITCH may further cut off the DC power supply, in order to ensure the more safe operation of each component in the three-level boost converter, thereby further avoiding damage to the flying capacitor Cf, and avoiding damage to the second switching transistor S2 caused by the abnormality of the first switching transistor S1, or avoiding damage to the first switching transistor S1 caused by the abnormality of the second switching transistor S2.

A photovoltaic system is further provided according to the present disclosure. The photovoltaic system includes: a photovoltaic module, an inverter circuit and the three-level boost converter as described in the above embodiments. An end of the three-level boost converter is connected to an output end of the photovoltaic module, and another end of the three-level boost converter is connected to an input end of the inverter circuit.

In an embodiment, as shown in FIG. 8, a method for controlling a three-level boost converter is further provided according to the present disclosure. The method is applied to the three-level boost converter as described in the above embodiments. The method includes the following steps S802 and S804.

In step S802, an operating state of the first switching transistor and an operating state of the second switching transistor are obtained.

In step S804, upon determining that the first switching transistor is abnormal or the second switching transistor is abnormal, the on-off state of the first switching transistor is synchronized with the on-off state of the second switching transistor.

Detailed implementation process of the above method embodiment corresponds to the above three-level boost converter. The detailed implementation process can refer to the description of the above embodiment and is not repeated here. The on-off state of the first switching transistor is synchronized with the on-off state of the second switching transistor, avoiding overvoltage and overcurrent and reducing the risk of failure. In a case that one of the first switching transistor and the second switching transistor is abnormal, parameters are obtained to determine the abnormal device, the other normal controllable switching device is controlled to perform corresponding protection operation to keep synchronization of the on-off states, thereby avoiding a more serious damage to the three-level boost converter due to the out of control of the individual switching device, and ensuring the stability and reliability of the system.

In an embodiment, upon determining that the first switching transistor is abnormal or the second switching transistor is abnormal, the on-off state of the first switching transistor is synchronized with the on-off state of the second switching transistor by:
driving, in response to the abnormal switching transistor, the normal switching transistor to be in the on-off state of the abnormal switching transistor.
where, the abnormal switching transistor is the first switching transistor or the second switching transistor whose the on-off state does not match a received turn-on/off signal.

In an embodiment, in response to the abnormal switching transistor, the normal switching transistor is driven to be in an on-off state of the abnormal switching transistor by:
driving the first switching transistor and the second switching transistor to be continuously on, in response to the first switching transistor being still on after a turn-off signal is outputted to the first switching transistor, or in response to the second switching transistor being still on after a turn-off signal is outputted to the second switching transistor.

In an embodiment, in response to the abnormal switching transistor, the normal switching transistor is driven to be in an on-off state of the abnormal switching transistor by:
driving the first switching transistor and the second switching transistor to be continuously off, in response to the first switching transistor being still off after a turn-on signal is outputted to the first switching transistor, or in response to the second switching transistor being still off after a turn-on signal is outputted to the second switching transistor.

The implementation manners and beneficial effects of the embodiments of the method described above can refer to the description in the embodiments of the three-level boost converter described above, and are not repeated herein.

In an embodiment, as shown in FIG. 9, a method for controlling a three-level boost control system is further provided according to the present disclosure. The method for controlling a three-level boost control system is applied to the three-level boost control system as described in the above embodiments. The method for controlling a three-level boost control system includes the following steps S902 and S904.

In step S902, an operating state of the first switching transistor and an operating state of the second switching transistor.

In step S904, upon determining that the first switching transistor is abnormal or the second switching transistor is abnormal, the DC switch is controlled to cut off the DC power supply.

In the above embodiments, upon determining that the first switching transistor is abnormal or the second switching transistor is abnormal, in addition to synchronizing the on-off state of the first switching transistor with the on-off state of the second switching transistor, the DC switch may further cut off the DC power supply, in order to ensure the more safe operation of each component in the three-level boost converter, thus avoiding a further damage to the flying capacitor, and avoiding a damage to the second switching transistor caused by the abnormality of the first switching transistor, or avoiding a damage to the first switching transistor caused by the abnormality of the second switching transistor.

It should be understood that although the steps in the flowcharts involved in the above embodiments are displayed in a sequence indicated by arrows, it may be not necessary to execute the steps strictly according to such sequence. Unless otherwise explicitly specified herein, a sequence of performing the steps is not strictly limited, and the steps can be performed in other sequence. Moreover, at least a part of the steps in the flowcharts involved in the embodiments described above may include multiple steps or multiple stages. It may be not necessary to perform these steps or the stages at the same time, and these steps or the stages can be performed at different times. Moreover, it may be not necessary to perform these steps or the stages sequentially. Rather, these steps or the stages may be performed alternately along with at least some steps or stages of another steps.

Based on the same inventive concept, an apparatus for controlling a three-level boost converter is further provided according to an embodiment of the present disclosure, and is for implementing the method for controlling the three-level boost converter described above. The implementation solution for solving the problem provided by the apparatus is similar to the implementation solution recorded in the above method, so the detailed descriptions of one or more embodiments of the apparatus for controlling the three-level boost converter provided below can refer to the descriptions of the method for controlling the three-level boost converter as described above, and are not repeated herein.

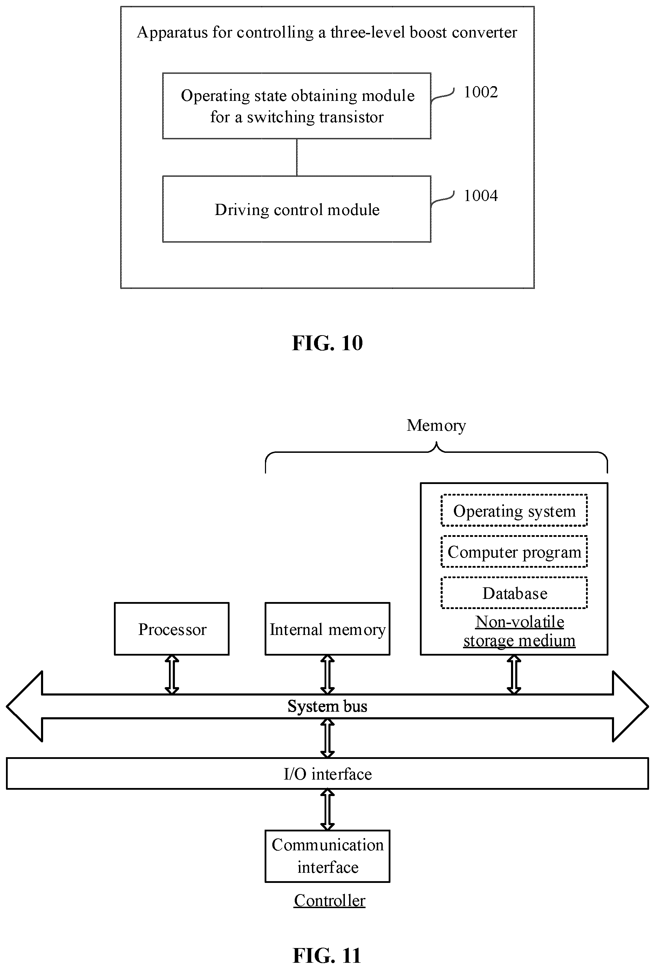

In an embodiment, as shown in FIG. 10, an apparatus for controlling a three-level boost converter is provided. The apparatus is applied to the three-level boost converter as described in the above embodiments. The apparatus includes an operating state obtaining module 1002 for a switching transistor and a driving control module 1004.

The operating state obtaining module 1002 for a switching transistor is configured to obtain an operating state of the first switching transistor and an operating state of the second switching transistor.

The driving control module 1004 is configured to synchronize, upon determining that the first switching transistor is abnormal or the second switching transistor is abnormal, the on-off state of the first switching transistor with the on-off state of the second switching transistor.

In an embodiment, the driving control module 1004 includes a driving control unit.

The driving control unit is configured to drive, in response to the abnormal switching transistor, the normal switching transistor to be in an on-off state of the abnormal switching transistor.
where the abnormal switching transistor is the first switching transistor or the second switching transistor whose the on-off state does not match a received turn-on/off signal.

In an embodiment, the driving control unit includes a first driving unit.

The first driving unit is configured to drive the first switching transistor and the second switching transistor to be continuously on, in response to the first switching transistor being still on after a turn-off signal is outputted to the first switching transistor, or in response to the second switching transistor being still on after a turn-off signal is outputted to the second switching transistor.

In an embodiment, the driving control unit further includes a second driving unit.

The second driving unit is configured to drive the first switching transistor and the second switching transistor to be continuously off, in response to the first switching transistor being still off after a turn-on signal is outputted to the first switching transistor, or in response to the second switching transistor being still off after a turn-on signal is outputted to the second switching transistor.

In an embodiment, an apparatus for controlling a three-level boost control system is provided. The apparatus is applied to the three-level boost control system in the embodiments as described above. The apparatus includes an operating state obtaining module for a switching transistor and a cutting-off module for a DC power supply.

The operating state obtaining module for a switching transistor is configured to obtain an operating state of the first switching transistor and an operating state of the second switching transistor.

The cutting-off module for a DC power supply is configured to control, upon determining that the first switching transistor is abnormal or the second switching transistor is abnormal, the DC switch to cut off the DC power supply.

Each of the modules in the apparatus for controlling the three-level boost converter described above can be implemented in whole or in part by software, hardware or a combination thereof. Each of the modules can be embedded in or independent of a processor in a computer device in the form of hardware, or can be stored in a memory in the computer device in the form of software, so that the processor can call and execute the operations corresponding to each of the modules.

In an embodiment, a computer device is provided. The computer device may be a controller. An internal structural diagram of the computer device is shown in FIG. 11. The computer device includes a processor, a memory, an input/output interface (Input/Output, referred to as I/O) and a communication interface. The processor, the memory and the input/output interface are connected to each other through a system bus, and the communication interface is connected to the system bus through the input/output interface. The processor of the computer device is configured to provide capabilities of computing and controlling. The memory of the computer device includes a non-volatile storage medium and an internal memory. The non-volatile storage medium stores an operating system, a computer program and a database. The internal memory provides an environment for the operation of the operating system and the computer program in the non-volatile storage medium. The database of the computer device is configured to store data such as a DC bus voltage, a voltage of a flying capacitor, an input voltage and an input current. The input/output interface of the computer device is configured to exchange information between the processor and external devices. The communication interface of the computer device is configured to communicate with external terminals through a network connection. The computer program performs, when being executed by the processor, a method for controlling a three-level boost converter.

It can be understood by those skilled in the art that the structure shown in FIG. 11 is merely a block diagram of a portion of the structure related to the solution of the present disclosure, and does not constitute a limitation on the computer device to which the solutions of the present disclosure is applied. The computer device may include more or fewer components than those shown in the figure, or combine parts of components, or have a different arrangement of components.

In an embodiment, a controller is provided. The controller includes a memory and a processor. The memory stores a computer program. The processor performs, when executing the computer program, the method in the embodiments as described above.

In an embodiment, a computer-readable storage medium is provided. The computer-readable storage medium stores a computer program. The computer program performs, when being executed by a processor, the method in the embodiments as described above.

In an embodiment, a computer program product is provided. The computer program product includes a computer program. The computer program performs, when being executed by a processor, the method in the embodiments as described above.

It can be understood by those skilled in the art that all or parts of the processes in the method in the embodiments as described above can be implemented by instructing the relevant hardware through the computer program. The computer program may be stored in a non-volatile computer-readable storage medium. When the computer program is executed, the processes of the embodiments of the methods may be implemented. Any reference to the memory, the database or the other medium used in the embodiments provided in the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory and the like. The volatile memory may include a random access memory (RAM) or an external cache memory and the like. As an illustration rather than a limitation, a RAM may be in multiple forms, such as a static random access memory (SRAM) or a dynamic random access memory (DRAM). The database involved in each of the embodiments provided in the present disclosure may include at least one of a relational database and a non-relational database. The non-relational database may include but is not limited to a distributed database based on blockchain or the like. The processor involved in each of the embodiments provided in the present disclosure may include, but is not limited to, a general-purpose processor, a central processor unit, a graphics processor, a digital signal processor, a programmable logic unit and a data processing logic unit based on quantum computing and the like.

The technical features of the above embodiments can be combined arbitrarily. To make the description concise, not all possible combinations of the technical features in the embodiments are described herein. All combinations of these technical features are regarded as falling within the scope of the present disclosure, as long as there is no conflict.

Hereinabove several embodiments of the present disclosure are illustrated in detail, and these embodiments shall not be construed as a limitation to the scope of the present disclosure. Those skilled in the art may make various modifications and improvements on such basis without departing from a concept of the present disclosure. These modifications and improvements fall within the protection scope of the present disclosure. Therefore, the protection scope of the present disclosure is subject to the claims.

## Claims

1. A three-level boost converter, comprising: an inductor, a first switching transistor, a second switching transistor, a first diode, a second diode, a third diode, a flying capacitor and a controller, wherein
a first terminal of the inductor is configured to connect a positive input terminal of the three-level boost converter;
a first terminal of the first switching transistor is connected to a second terminal of the inductor;
a first terminal of the second switching transistor is connected to a second terminal of the first switching transistor, and a second terminal of the second switching transistor is configured to connect a negative input terminal of the three-level boost converter;
an anode of the first diode is connected to the second terminal of the inductor and the first terminal of the first switching transistor;
an anode of the second diode is connected to a cathode of the first diode, a cathode of the second diode is configured to connect a positive input terminal of a direct-current, DC, bus, and a negative input terminal of the DC bus is connected to the negative input terminal of the three-level boost converter;
an anode of the third diode is connected to the second terminal of the first switching transistor, and a cathode of the third diode is configured to connect a neutral point of the DC bus;
a first terminal of the flying capacitor is connected to the cathode of the first diode, and a second terminal of the flying capacitor is connected to the anode of the third diode; and
the controller is configured to synchronize, upon determining that the first switching transistor is abnormal or the second switching transistor is abnormal, an on-off state of the first switching transistor with an on-off state of the second switching transistor.

2. The three-level boost converter according to claim 1, wherein the controller is configured to:
drive, in response to the abnormal switching transistor, the normal switching transistor to be in an on-off state of the abnormal switching transistor, wherein
the abnormal switching transistor is the first switching transistor or the second switching transistor whose the on-off state does not match a received turn-on/off signal.

3. The three-level boost converter according to claim 2, wherein the controller is configured to:
drive the first switching transistor and the second switching transistor to be continuously on, in response to the first switching transistor being still on after the controller outputs a turn-off signal to the first switching transistor, or in response to the second switching transistor being still on after the controller outputs a turn-off signal to the second switching transistor.

4. The three-level boost converter according to claim 2, wherein the controller is configured to:
drive the first switching transistor and the second switching transistor to be continuously off, in response to the first switching transistor being still off after the controller outputs a turn-on signal to the first switching transistor, or in response to the second switching transistor being still off after the controller outputs a turn-on signal to the second switching transistor.

5. A three-level boost control system, comprising:
the three-level boost converter according to any one of claims 1 to 4;
a DC switch; wherein
an end of the DC switch is configured to connect a DC power supply for the three-level boost control system, and another end of the DC switch is connected to an input end of the three-level boost converter; and
the controller is further configured to control the DC switch to cut off the DC power supply upon determining that the first switching transistor is abnormal or the second switching transistor is abnormal.

6. A method for controlling a three-level boost converter, applied to the three-level boost converter according to any one of claims 1 to 4, wherein the method comprises:
obtaining an operating state of the first switching transistor and an operating state of the second switching transistor; and
synchronizing, upon determining that the first switching transistor is abnormal or the second switching transistor is abnormal, the on-off state of the first switching transistor with the on-off state of the second switching transistor.

7. The method according to claim 6, wherein the synchronizing, upon determining that the first switching transistor is abnormal or the second switching transistor is abnormal, the on-off state of the first switching transistor with the on-off state of the second switching transistor comprises:
driving, in response to the abnormal switching transistor, the normal switching transistor to be in an on-off state of the abnormal switching transistor, wherein
the abnormal switching transistor is the first switching transistor or the second switching transistor whose the on-off state does not match a received turn-on/off signal.

8. The method according to claim 7, wherein the driving, in response to the abnormal switching transistor, the normal switching transistor to be in an on-off state of the abnormal switching transistor comprises:
driving the first switching transistor and the second switching transistor to be continuously on, in response to the first switching transistor being still on after a turn-off signal is outputted to the first switching transistor, or in response to the second switching transistor being still on after a turn-off signal is outputted to the second switching transistor.

9. The method according to claim 7, wherein the driving, in response to the abnormal switching transistor, the normal switching transistor to be in an on-off state of the abnormal switching transistor comprises:
driving the first switching transistor and the second switching transistor to be continuously off, in response to the first switching transistor being still off after a turn-on signal is outputted to the first switching transistor, or in response to the second switching transistor being still off after a turn-on signal is outputted to the second switching transistor.

10. A method for controlling a three-level boost control system, applied to the three-level boost control system according to claim 5, wherein the method comprises:
obtaining an operating state of the first switching transistor and an operating state of the second switching transistor; and
controlling, upon determining that the first switching transistor is abnormal or the second switching transistor is abnormal, the DC switch to cut off the DC power supply.

11. An apparatus for controlling a three-level boost converter, applied to the three-level boost converter according to any one of claims 1 to 4, wherein the apparatus comprises:
an operating state obtaining module for a switching transistor, configured to obtain an operating state of the first switching transistor and an operating state of the second switching transistor; and
a driving control module, configured to synchronize, upon determining that the first switching transistor is abnormal or the second switching transistor is abnormal, the on-off state of the first switching transistor with the on-off state of the second switching transistor.

12. A photovoltaic system, comprising:
a photovoltaic module;
an inverter circuit; and
the three-level boost converter according to any one of claims 1 to 4, wherein an end of the three-level boost converter is connected to an output end of the photovoltaic module, and another end of the three-level boost converter is connected to an input end of the inverter circuit.

13. A controller, comprising a memory and a processor; wherein
the memory stores a computer program; and
the processor performs, when executing the computer program, the method according to any one of claims 6 to 9.

14. A computer-readable storage medium, storing a computer program, wherein the computer program performs, when being executed by a processor, the method according to any one of claims 6 to 9.
